(19) Europäisches Patentamt
European Patent Office
Office européen des brevets

(11) EP 2 213 359 A1

(12) **EUROPEAN PATENT APPLICATION**

(43) Date of publication:
04.08.2010 Bulletin 2010/31

(51) Int Cl.:
*B01D 46/24* (2006.01)

(21) Application number: 10250031.1

(22) Date of filing: 08.01.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 20.01.2009 JP 2009010390

(71) Applicant: NGK Insulators, Ltd.
Aichi Pref. 467-8530 (JP)

(72) Inventor: Toyoshima, Hideyuki
Nagoya City
Aichi-ken 467-8530 (JP)

(74) Representative: Paget, Hugh Charles Edward et al
Mewburn Ellis LLP
33 Gutter Lane
London
EC2V 8AS (GB)

(54) **Exhaust gas purification apparatus provided with self-diagnosis filter**

(57)     There is provided an exhaust gas purification apparatus 1 including: a particulate matter-trapping filter, a self-diagnosis filter 10 provided on the exhaust gas downstream side of the particulate matter-trapping filter, and a pressure gauge 11 provided between the particulate matter-trapping filter and the self-diagnosis filter 10. The apparatus has a means which can be applied to an on-board diagnosis system (OBD) and can check the state of a DPF.

FIG.1

EP 2 213 359 A1

**Description**

Background of the Invention and Related Art Statement

The present invention relates to an exhaust gas purification apparatus provided with a filter for self-diagnosing the deterioration in particulate matter-trapping performance.

In consideration of the influences on the environment, there is increased need to reduce and remove harmful substances in exhaust gas from internal combustion engines, boilers, and the like. In particular, regulations on harmful substances in exhaust gas from vehicles equipped with a gasoline engine or a diesel engine tend to be strengthened on a global basis.

Against this background, besides a common-rail injection system, an exhaust gas recirculation equipment (EGR system), and the like, there are being developed a ternary catalyst, a catalyst converter, a diesel oxidation catalyst (DOC), a particulatematter-trapping filter (diesel particulate filter (DPF)), a urea selective catalytic reduction (urea SCR), a lean NOx trap catalyst (LNT), and the like as aftertreatment technologies. An example is a recent diesel engine automobile exhaust gas purification apparatus constituted of a DOC, a DPF with a catalyst, and a urea SCR from the upstream side.

An exhaust gas purification apparatus constituted of the aforementioned high technology as a matter of course has a precondition that performance during the use is maintained. Therefore, it is important to urge the inspection and maintenance of the apparatus by providing information to a driver regarding reliability of the apparatus and to try to build up inspection regime in accordance with new technologies so that inspection and maintenance can easily be received.

From such circumstances, introduction of an on-board fault diagnosis equipment (on-board diagnosis system (OBD)), which gives an alarm to the driver when the exhaust gas purification apparatus is out of order, is forwarded on a global basis. In Japan, a policy of the mandatory mounting of the equipment in a newly-sold automobile has been shown. Incidentally, an example of a prior art document is JP-A-2006-267021.

However, it has been difficult to enable confirmation with the OBD by judging deterioration of a DPF for trapping and removing particulate matter (PM) discharged from a diesel engine and taking the results in the OBD as an electric signal among the aforementioned aftertreatment technologies.

For example, there has been proposed a method of judging a state of a DPF as follows. The PM generation amount depending on the driving conditions of each engine are set, and the PM regeneration amount in a DPF depending on the exhaust gas temperature are set, and these data are stored in a control apparatus in advance to predict the state of the DPF on the basis of the driving conditions of an actual engine and these data.

However, it is difficult to build up a database in consideration of a change in engine performance with the passage of time and a solid difference of engines. In addition, this method has low accuracy because it is not based on practical measurement, and it is necessary to estimate a safety rate to be high.

As another method, there has been proposed the use of a PM (soot) sensor. When the practical measurement is conducted by the use of a PM sensor, it is not necessary to estimate the safety rate to be high.

Though, a sensor technology has not been established yet. For example, there is known a PM sensor provided with a heat resistant (electrically) insulating member which traps conductive fine particles. However, since detection sensitivity cannot be obtained until PM is deposited on the heat resistant insulating member to a level which conduction between a pair of electrodes is secured, sensitivity and responsiveness are not high.

Summary of the Invention

The present invention has been made in view of the aforementioned circumstances and aims to provide a means which can be applied to an OBD and can check the state of the DPF.

As a result of further studies, it was found out that the aim can be achieved by providing another filter for diagnosing deterioration in PM trapping performance of a DPF and a pressure detection means on the exhaust gas downstream side of the DPF (filter).

That is, according to the present invention, there is provided an exhaust gas purification apparatus comprising:

a particulate matter-trapping filter,
a self-diagnosis filter provided on the exhaust gas downstream side of the particulate matter-trapping filter, and
a pressure gauge provided between the particulate matter-trapping filter and the self-diagnosis filter (first exhaust gas purification apparatus).

In the first exhaust gas purification apparatus of the present invention, it is preferable to further provide another pressure gauge on the exhaust gas downstream side of the self-diagnosis filter.

Next, according to the present invention, there is provided an exhaust gas purification apparatus comprising:

a particulate matter-trapping filter,
a self-diagnosis filter provided on the exhaust gas downstream side of the particulate matter-trapping filter, and
a differential pressure gauge measuring a differential pressure between the inlet side and the outlet side of the self-diagnosis filter (second exhaust gas purification apparatus).

In the present specification, when simply an exhaust gas purification apparatus (of the present invention) is referred to, it means both the first and the second exhaust gas purification apparatuses. In an exhaust gas purification apparatus of the present invention, it is preferable that the aforementioned self-diagnosis filter is a honeycomb structure having a plurality of cells functioning as fluid passages partitioned by porous partition walls and that the partition walls have a porosity of 35% or more. This is a honeycomb structure with no plugged portion.

In addition, in an exhaust gas purification apparatus of the present invention, it is preferable that the aforementioned self-diagnosis filter is a honeycomb structure having a plurality of cells functioning as fluid passages partitioned by porous partition walls, with an end portion on one side of each of predetermined cells being plugged with a plugging portion of a plugging material filled into the cells, and that the partition walls have a porosity of 35% or more. This is a one side-plugged honeycomb structure, where one end face or the vicinity of one end face has plugged portions.

Further, in an exhaust gas purification apparatus of the present invention, it is preferable that the aforementioned self-diagnosis filter is a honeycomb structure having a plurality of cells functioning as fluid passages partitioned by porous partition walls, with an end portion on one side of each of predetermined cells being plugged with a plugging portion of a plugging material filled into the cells and an end portion on the other side of each of the remaining cells being plugged with a plugging portion of a plugging material filled into the cells, and that the partition walls have a porosity of 35% or more. This is a both side-plugged honeycomb structure, where both the end faces or the vicinities of both the end faces have plugged portions.

In an exhaust gas purification apparatus of the present invention, the partition walls of the honeycomb structure constituting the self-diagnosis filter have a porosity of preferably 35% or more and 70% or less, more preferably 35% or more and 65% or less, particularly preferably 40% or more and 65% or less. Incidentally, the porosity referred to in the present specification is measured by a mercury porosimeter (method of mercury porosimetry).

In an exhaust gas purification apparatus of the present invention, the self-diagnosis filter has a PM trapping efficiency of preferably 40% or more and 80% or less, more preferably 45% or more and 75% or less, particularly preferably 47% or more and 72% or less. The aforementioned porosity is specified to realize such trapping efficiency. Incidentally, the trapping efficiency will be described later.

In an exhaust gas purification apparatus of the present invention, it is preferable that the aforementioned self-diagnosis filter contains one kind selected from the group consisting of cordierite, silicon carbide, siliconnitride, alumina, mullite, and lithium aluminum silicate as a main crystal phase.

In an exhaust gas purification apparatus of the present invention, it is preferable that the self-diagnosis filter has a partition wall thickness of 0.025 mm (1 mil) or more and 0.51 mm (20 mil) or less.

In addition, the self-diagnosis filter has a cell density of preferably 116 cells/cm$^2$ (750 cpsi (cells per square inch)) or more and 233 cells/cm$^2$ (1500 cpsi) or less in the case of a honeycomb structure with no plugging portion and 15 cells/ cm$^2$ (100 cpsi) or more and 47 cells/ cm$^2$ (300 cpsi) or less in the case of a honeycomb structure with plugging portions (plugging on one side or on both sides).

Further, the self-diagnosis filter has a length of preferably 250 mm or less, more preferably 200 mm or less from the viewpoint of abnormality detection rate, and preferably 10 mm or more, more preferably 25 m or more from the viewpoint of canning.

An exhaust gas purification apparatus of the present invention is provided with at least a particulate matter-trapping filter for purifying exhaust gas. That is, an exhaust gas purification apparatus of the present invention have only to be provided with at least a particulate matter-trapping filter as a diagnosis target on the exhaust gas upstream side of the self-diagnosis filter without putting another filter between them. An exhaust gas purification apparatus of the present invention can employ a constitution including another exhaust gas purification element technology.

Since the first exhaust gas purification apparatus of the present invention is provided with a self-diagnosis filter provided on the exhaust gas downstream side of the particulate matter (PM) trapping filter and a pressure gauge provided between the particulate matter-trapping filter and the self-diagnosis filter, deterioration of the PM trapping filter can be detected on the basis of the measurement value (pressure value) of the pressure gauge.

In the case of no deterioration of the PM trapping filter, since no PM flows into the self-diagnosis filter, or only a minute amount of PM is deposited on it, the self-diagnosis filter has a small pressure loss, and the pressure between the particulate matter-trapping filter and the self-diagnosis filter (the exhaust gas upstream side of the self-diagnosis filter) is low. In contrast, when the PM trapping filter is deteriorated, since PM flowing out from the PM trapping filter is deposited on the self-diagnosis filter, the pressure resistance of the self-diagnosis filter rapidly increases to raise the pressure on the exhaust gas upstream side of the self-diagnosis filter. Therefore, the pressure on the exhaust gas upstream side of the self-diagnosis filter is measured to be able to judge deterioration of the PM trapping filter on the basis of the measurement. In addition, by outputting the pressure value of the pressure gauge to the OBD as an electric signal, it becomes possible to grasp or judge the state of the particulate matter-trapping filter (DPF) by the OBD.

Since the first exhaust gas purification apparatus of the present invention is further provided with another pressure gauge on the exhaust gas downstream side of the self-diagnosis filter in a preferable mode, pressure can be measured on both the exhaust gas upstream side and the exhaust gas downstream side of the self-diagnosis filter, and thereby the amount of the PM flowing out from the PM trapping filter can be detected with higher accuracy.

Incidentally, this point is the same also in the second exhaust gas purification apparatus of the present invention. Since the second exhaust gas purification apparatus of the present invention is provided with a self-diagnosis filter provided on the exhaust gas downstream side of the particulate matter-trapping filter and a differential pressure gauge for measuring differential pressure between the inlet side and the outlet side of the self-diagnosis filter, deterioration of a PM trapping filter can be detected on the basis of the measurement value (value of the pressure difference) of the differential pressure gauge.

That is, in an exhaust gas purification apparatus of the present invention, a self-diagnosis filter and a pressure gauge or a differential pressure gauge function as detection sensors for the OBD for detecting performance deterioration, damage, or the like of the DPF. In an exhaust gas purification apparatus of the present invention, since a state of a DPF is judged on the basis of a practically measured value, it is not necessary to consider an unnecessary safety rate. In addition, since only a self-diagnosis filter and a pressure gauge or a differential pressure gauge are attached additionally to a conventional exhaust gas purification apparatus, it is easy to build them into, for example, an automobile. Further, even in the case that the trapping efficiency is decreased due to deterioration of the PM trapping filter, abnormality can be detected without discharging PM from the exhaust pipe.

In an exhaust gas purification apparatus of the present invention, since the honeycomb structure constituting the self-diagnosis filter has a partition wall porosity of 35% or more, pressure loss of the self-diagnosis filter does not become too high, and therefore it is suitable as a means for diagnosing a PM trapping filter that adjusts to the OBD (so to speak, sensor) in order to detect performance deterioration, damage, and the like of the DPF.

Brief Description of the Drawings

[Fig. 1] Fig. 1 is a configuration diagram schematically showing one embodiment of the first exhaust gas purification apparatus of the present invention.

[Fig. 2] Fig. 2 is a configuration diagram schematically showing another embodiment of the first exhaust gas purification apparatus of the present invention.

[Fig. 3] Fig. 3 is a configuration diagram schematically showing one embodiment of the second exhaust gas purification apparatus of the present invention.

[Fig. 4] Fig. 4 is a view showing the results of Examples and graph showing the relation between porosity and pressure loss of a honeycomb structure (self-diagnosis filter).

[Fig. 5] Fig. 5 is a view showing the results of Examples and graph showing the relation between PM trapping efficiency and pressure loss of a honeycomb structure (self-diagnosis filter).

Reference Numerals

1, 2, 3: exhaust gas purification apparatus, 10: self-diagnosis filter, 11, 12: pressure gauge, 13: differential pressure gauge

Detailed Description of the Invention

Hereinafter, embodiments of the present invention will be described with accordingly referring to drawings. However, the present invention should not be construed with limiting to these embodiments. Various changes, modifications, improvements, and substitutions may be added on the basis of knowledge of a person of ordinary skill within the range of not impairing the gist of the present invention. For example, the drawings represent suitable embodiments of the present invention. However, the present invention is by no means limited by the modes represented in the drawings or information shown in the drawings. Upon carrying out or investigating the present invention, the same means as or a means to equivalent to the means described in the present specification can be applied. However, a suitable means is a means described below.

In the first place, a constitution of an exhaust gas purification apparatus of the present invention will be described.

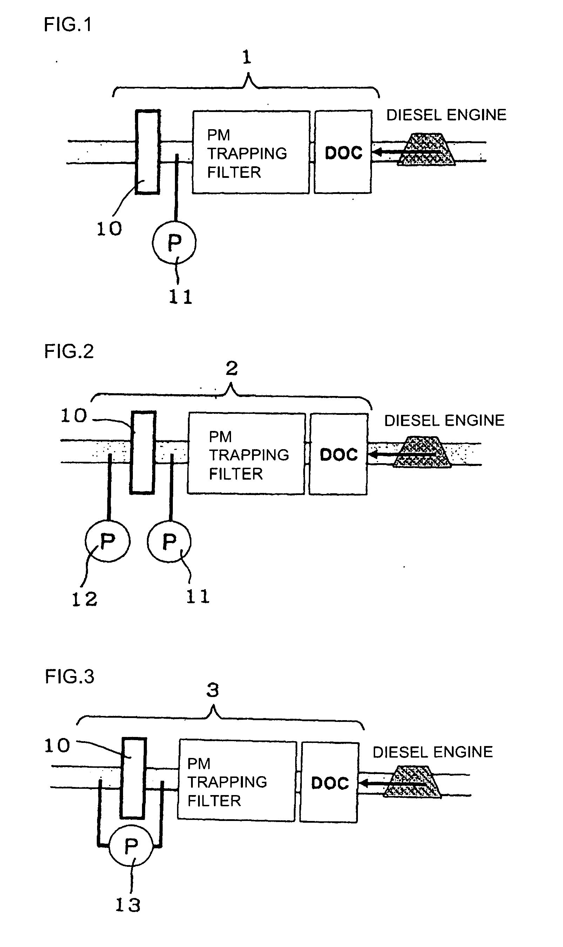

Fig. 1 is a configuration diagram schematically showing one embodiment of the first exhaust gas purification apparatus of the present invention, showing an exhaust system of a diesel engine. In Fig. 1, exhaust gas is discharged from a diesel engine and flows from the right side to the left side. The exhaust gas purification apparatus 1 shown in Fig. 1 is provided with a DOC (diesel oxidation catalyst), a particulate matter-trapping filter (DPF) on the exhaust gas downstream side of the DOC, a self-diagnosis filter 10 on the exhaust gas downstream side of the DPF, and a pressure gauge 11 between the PM trapping filter and the self-diagnosis filter 10. The pressure gauge 11 measures pressure on the inlet side of the self-diagnosis filter 10 to grasp the state (presence/absence of performance deterioration, damage, or the like) of the particulate matter-trapping filter (DPF) and, eventually, the exhaust gas purification apparatus 1 do the self-diagnosis by that.

Fig. 2 is a configuration diagram schematically showing another embodiment of the first exhaust gas purification apparatus of the present invention, showing an exhaust system of a diesel engine like Fig. 1. The exhaust gas purification apparatus 2 shown in Fig. 2 is provided with another pressure gauge 12 on the exhaust gas downstream side of the self-diagnosis filter 10 in the exhaust gas purification apparatus 1. The pressure gauges 11 and 12 measure pressure on the inlet side and the outlet side of the self-diagnosis filter 10 to obtain the difference (differential pressure) between them, grasp the state of the particulate matter-trapping filter (DPF) and, eventually, the exhaust gas purification apparatus 2 do the self-diagnosis by that.

Fig. 3 is a configuration diagram schematically showing one embodiment of the second exhaust gas purification apparatus of the present invention, showing an exhaust system of a diesel engine like Fig. 1. The exhaust gas purification apparatus 3 shown in Fig. 3 is provided with a differential pressure gauge 13 in place of the two pressure gauges 11 and 12 in the exhaust gas purification apparatus 2. The differential pressure gauge 13 measures pressure on the inlet side and the outlet side of the self-diagnosis filter 10 to obtain the difference (differential pressure) between them, grasp the state of the particulate matter-trapping filter (DPF), and, eventually, the exhaust gas purification apparatus 3 do the self-diagnosis by that.

Next, a method for manufacturing an exhaust gas purification apparatus of the present invention will be described with employing the exhaust gas purification apparatus 2 shown in Fig. 2 as the example.

The exhaust gas purification apparatus 2 can be obtained by combining a new self-diagnosis filter 10 and new pressure gauges 11, 12 with a known DOC and a known DPF. The DOC, DPF, and self-diagnosis filter 10 may be subjected to canning as one body, or the DOC and the DPF may be subjected to canning separately from the self-diagnosis filter 10 to attach the pressure gauges 11, 12 in front and at the back of the canned self-diagnosis filter 10. By the latter method, it is also possible to add a so-called sensor constituted of the self-diagnosis filter 10 and the pressure gauges 11 and 12 to an existing exhaust gas purification apparatus to remodel the apparatus to obtain an exhaust gas purification apparatus of the present invention.

As the pressure gauges 11, 12, commercially available pressure gauges can be used. For example, pressure gauges of a diaphragm type, a bourdon type, a bellows type, and the like can be employed. It is preferable to use a pressure gauge capable of outputting an electric signal in order to output to OBD. Incidentally, the same can be applied to the differential pressure in exhaust gas purification apparatus 3.

The self-diagnosis filter 10 is a (both side-plugged) honeycomb structure having, for example, a plurality of cells functioning as fluid passages partitioned by porous partition walls, where one end portion on one side of each of predetermined cells is plugged with a plugging portion made of a plugging material filled into the cells, and each of the other cells is plugged in one end portion on the other side with a plugging portion made of a plugging material filled into the cells. The structure of the self-diagnosis filter 10 is the same as the DPF on the upstream side thereof. However, the partition walls of the self-diagnosis filter 10 have a porosity of 35% or more.

The self-diagnosis filter 10 can be manufactured by a known manufacturing method of a honeycomb structure. For example, a ceramic raw material, a binder, a pore former, water, and the like are mixed together to obtain a forming raw material; the forming raw material is kneaded by the use of a kneader, a vacuum kneader, or the like to prepare kneaded clay; the kneaded clay is formed into a honeycomb shape by the use of an extruder provided with a die to obtain a honeycomb formed article; the honeycomb formed article is dried to obtain a honeycomb dried article; plugging is performed to the honeycomb dried article; and the plugged honeycomb dried article is fired to obtain a honeycomb structure.

The firing temperature and time are appropriately set depending on the ceramic raw material. When a cordierite raw material is fired, firing is preferably performed at 1410 to 1440°C for about 3 to 10 hours.

The ceramic raw material is preferably one kind selected from the group consisting of a cordierite-forming raw material, silicon carbide, silicon nitride, alumina, mullite, and lithium aluminum silicate. The cordierite-forming raw material means a raw material which becomes cordierite by firing and ceramic raw material having a chemical composition of 42 to 56 mass% of silica, 30 to 45 mass% of alumina, and 12 to 16 mass% of magnesia. Specifically, there may be employed a material containing a plurality of inorganic raw materials selected from talc, kaolin, calcined kaolin, alumina, aluminum hydroxide, and silica at the aforementioned chemical composition.

As the binder, there may be employed methyl cellulose, hydroxypropoxyl cellulose, hydroxyethyl cellulose, carboxymethyl cellulose, polyvinyl alcohol, or the like. Of these, it is preferable to use methyl cellulose and hydroxypropoxyl cellulose together.

The binder content is preferably 5 to 25 parts by mass with respect to 100 parts by mass of the ceramic raw material. The water content is preferably 10 to 30 parts by mass with respect to 100 parts by mass of the ceramic raw material. Any pore former can be used as long as it scatters and disappears upon firing, and an inorganic substance such as graphite or coke, a polymer compound such as a resin balloon, an organic substance such as starch, and the like can be used alone or in combination. The pore former content is preferably 10 to 20 parts by mass with respect to 100 parts by mass of the ceramic raw material. The average particle diameter of the pore former is preferably 30 to 100 $\mu$m.

As a method for applying plugging (forming plugging portions), a mask is applied to an end portion of a honeycomb dried article in such a manner that cells are covered in a checkerboard pattern, and the end portion is immersed in plugging slurry stored in a container to fill the opening portions of the cells without the mask with the plugging slurry to form plugging portions. With regard to the other end portion, a mask is applied to the cells which are plugged in the end portions on one side, and plugging portions are formed in the same manner as the aforementioned method for forming plugging portion in one end portion on one side. As the plugging material, the same material as the aforementioned ceramic raw material is preferably used. This is because the plugging material can have the same expansion coefficient upon firing as that of the honeycomb dried article, which leads to improvement in durability. Incidentally,pluggingmaybeperformed in a honeycomb fired article after firing a honeycomb dried article without plugging.

When the plugging is not performed, a honeycomb structure without plugging can be obtained. When only one end portion on one side (or the other side) is subjected to plugging, a one side- plugged honeycomb structure can be obtained.

Next, a method for using an exhaust gas purification apparatus of the present invention will be described with using the exhaust gas purification apparatus 2 shown in Fig. 2.

The exhaust gas purification apparatus 2 can be used by, for example, being disposed in an exhaust system of a diesel engine and judge the state of the PM trapping filter on the basis of pressures measured by the pressure gauges 11 and 12 or the difference of them (differential pressure) to eventually diagnose a state of the exhaust gas purification apparatus 2. It is more preferable to construct a program of the OBD so that the pressures measured by the pressure gauges 11, 12 are output to the OBD as electric signals and that those pressure data, the diagnosis of the PM trapping filter or the exhaust gas purification apparatus 2 itself based on those pressure data, an alert, and the like can be expressed in the OBD.

Examples

Hereinafter, the present invention will be described more specifically with referring to Examples. However, the present invention is by no means limited to these Examples.

(1) With respect to 100 parts by mass of cordierite forming raw material, 20 parts by mass of each of methyl cellulose and hydroxypropoxyl cellulose and 30 parts by mass of each of graphite and water were mixed together to obtain a forming raw material, the forming raw material was kneaded by the use of a kneader to form kneaded clay, and the kneaded clay was formed into a honeycomb shape by the use of an extruder provided with a die to obtain a honeycomb formed article. The honeycomb formed articles obtained above was dried to obtain a honeycomb dried article, which was then subjected to plugging, and the plugged honeycomb dried article was fired at 1430°C for 5 hours to obtain a plurality of (both end-plugged) honeycomb structures each containing cordierite as the main crystal phase and having a size of 144 in diameter $\times$ 152 mm in length, a partition wall thickness of 0.31 mm (12 mil), a cell density of 47 cells/cm$^2$ (300 cpsi). The honeycomb structures had a (partition wall) porosity of 30%, 35%, 40%, 50%, 60%, 65%, and 70%, respectively, which was adjusted by varying the particle diameter and content of graphite upon manufacturing.

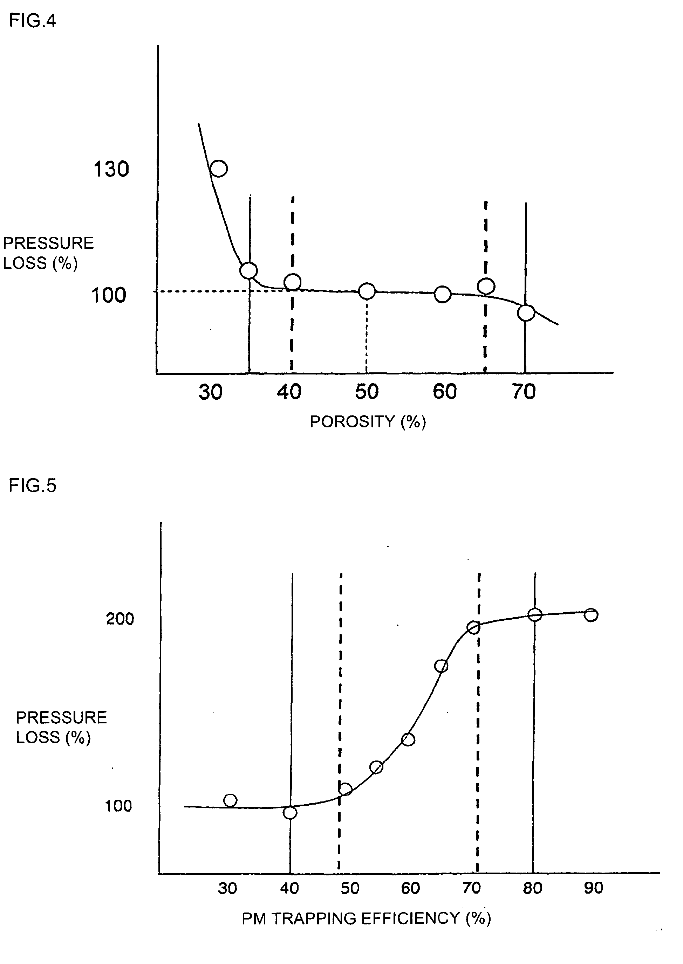

Exhaust gas containing PM generated by a PM (soot) generator was passed through each of the honeycomb structures obtained above for 2 minutes to measure pressure loss at the inlet and the outlet of thehoneycombstructure. The relation between porosity and pressure loss of the honeycomb structures is shown in Fig. 4. Incidentally, in Fig. 4, the pressure loss of the vertical axis is represented by a relative percentage value with employing the pressure loss at the case of 50% porosity as 100%.

From Fig. 4, it can be understood that, when the porosity is low (below 35%), the pressure loss of itself sharply increases to show that it is not suitable as a PM trapping filter diagnosis means (sensor) directly disposed in an exhaust gas flow system. In contrast, when the porosity is at a certain level or higher (35% or more), pressure loss is stable. It can be said that the porosity is preferably 35% or more and 70% or less (in the zone between the solid lines of Fig. 4), particularly preferably 40% or more and 65% or less (in the zone between the broken lines of Fig. 4).

(2) With respect to 100 parts by means of cordierite, 20 parts by mass of each of methyl cellulose and hydroxypropoxyl cellulose and 30 parts by mass of each of graphite and water were mixed together to obtain a forming raw material, the forming raw material was kneaded by the use of a kneader to form kneaded clay, and the kneaded clay was formed into a honeycomb shape by the use of an extruder provided with a die to obtain a honeycomb formed article. The honeycomb formed articles obtained above was dried to obtain a honeycomb dried article, which was then subjected to plugging, and the plugged honeycomb dried article was fired at 1430°C for 5 hours to obtain a plurality of (both end-plugged) honeycomb structures each containing cordierite as the main crystal phase and having a size of 144 in diameter $\times$ 152 mm in length, a partition wall thickness of 0.31 mm (12 mil), a cell density of 47 cells/cm$^2$ (300 cpsi). The honeycomb structures had varied PM trapping efficiencies by adjusting the porosity by varying the particle diameter and content of graphite upon manufacturing.

Exhaust gas containing PM generated by a PM (soot) generator was passed through each of the honeycomb structures obtained above for 2 minutes, and PM contained in the passed exhaust gas was trapped by a paper filter to measure the weight $W^1$ of the PM, and pressure loss at the inlet and the outlet of the honeycomb structure was measured. In addition, exhaust gas containing PM generated for the same period of time was trapped by a paper filter without passing through the honeycomb structure to measure the weight $W^2$ of the PM. Next, the weights $W^1$ and $W^2$ obtained above were substituted into the formula shown below to obtain the PM trapping efficiency. The relation between PM trapping efficiency and pressure loss is shown in Fig. 5. Incidentally, in Fig. 5, the pressure loss of the vertical axis is represented by a relative percentage value with employing the pressure loss at the case of the 30% PM trapping efficiency as 100%.

$$(W^2 - W^1) / (W^2) \times 100$$

From Fig. 5, it can be understood that, when the PM trapping efficiency is low, PM (soot) passes through, and pressure loss does not rise to make detection of deterioration of the honeycomb structure (self-diagnosis filter) difficult. In contrast, when the PM trapping efficiency is high, PM (soot) does not pass through (is trapped), and pressure loss rises to make detection of deterioration of the honeycomb structure (self-diagnosis filter) possible. It can be said that the PM trapping efficiency is preferably 40% or more and 80% or less (in the zone between the solid lines of Fig. 5), particularly preferably 47% or more and 72% or less (in the zone between the broken lines of Fig. 5).

An exhaust gas purification apparatus provided with a self-diagnosis filter of the present invention is used as a means for reducing and removing particulate matter in exhaust gas. In particular, it is suitably used as a means for removing particulate matter in exhaust gas from an automobile where a diesel engine is mounted and an apparatus compliant with an OBD (on-board diagnosis system).

**Claims**

1. An exhaust gas purification apparatus comprising:

   a particulate matter-trapping filter,
   a self-diagnosis filter provided on the exhaust gas downstream side of the particulate matter-trapping filter, and
   a pressure gauge provided between the particulate matter-trapping filter and the self-diagnosis filter.

2. An exhaust gas purification apparatus according to Claim 1, wherein another pressure gauge is further provided on the exhaust gas downstream side of the self-diagnosis filter.

3. An exhaust gas purification apparatus according to Claim 1 or 2, wherein the self-diagnosis filter is a honeycomb structure having a plurality of cells functioning as fluid passages partitioned by porous partition walls, and the partition walls have a porosity of 35% or more.

4. An exhaust gas purification apparatus according to Claim 1 or 2, wherein the self-diagnosis filter is a honeycomb structure having a plurality of cells functioning as fluid passages partitioned by porous partition walls, with an end portion on one side of each of predetermined cells being plugged with a plugging portion of a plugging material filled into the cells, and the partition walls have a porosity of 35% or more.

5. An exhaust gas purification apparatus according to Claim 1 or 2, wherein the self-diagnosis filter is a honeycomb structure having a plurality of cells functioning as fluid passages partitioned by porous partition walls, with an end portion on one side of each of predetermined cells being plugged with a plugging portion of a plugging material filled into the cells and an end portion on the other side of each of the remaining cells being plugged with a plugging portion of a plugging material filled into the cells, and the partition walls have a porosity of 35% or more.

6. An exhaust gas purification apparatus according to any one of Claims 1 to 5, wherein the self-diagnosis filter contains one kind selected from the group consisting of cordierite, silicon carbide, silicon nitride, alumina, mullite, and lithium aluminum silicate as a main crystal phase.

7. An exhaust gas purification apparatus comprising:

   a particulate matter-trapping filter,
   a self-diagnosis filter provided on the exhaust gas downstream side of the particulate matter-trapping filter, and
   a differential pressure gauge measuring a differential pressure between the inlet side and the outlet side of the self-diagnosis filter.

8. An exhaust gas purification apparatus according to Claim 7, wherein the self-diagnosis filter is a honeycomb structure having a plurality of cells functioning as fluid passages partitioned by porous partition walls, and the partition walls have a porosity of 35% or more.

9. An exhaust gas purification apparatus according to Claim 7, wherein the self-diagnosis filter is a honeycomb structure having a plurality of cells functioning as fluid passages partitioned by porous partition walls, with an end portion on one side of each of predetermined cells being plugged with a plugging portion of a plugging material filled into the cells, and the partition walls have a porosity of 35% or more.

10. An exhaust gas purification apparatus according to Claim 7, wherein the self-diagnosis filter is a honeycomb structure having a plurality of cells functioning as fluid passages partitioned by porous partition walls, with an end portion on one side of each of predetermined cells being plugged with a plugging portion of a plugging material filled into the cells and an end portion on the other side of each of the remaining cells being plugged with a plugging portion of a plugging material filled into the cells, and the partition walls have a porosity of 35% or more.

11. An exhaust gas purification apparatus according to any one of Claims 7 to 10, wherein the self-diagnosis filter contains one kind selected from the group consisting of cordierite, silicon carbide, silicon nitride, alumina, mullite, and lithium aluminum silicate as a main crystal phase.

FIG.1

FIG.2

FIG.3

FIG.4

FIG.5

Europäisches
Patentamt

European
Patent Office

Office européen
des brevets

**EUROPEAN SEARCH REPORT**

Application Number

EP 10 25 0031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/093229 A2 (AVL LIST GMBH [AT]; KAPUS PAUL [AT]; CARTUS THOMAS [AT]) 6 October 2005 (2005-10-06) * page 9, line 8 - page 10, line 20; figure 9 * ----- | 1-11 | INV. B01D46/24 |
| X | EP 1 503 052 A1 (PEUGEOT CITROEN AUTOMOBILES SA [FR]) 2 February 2005 (2005-02-02) * paragraph [0040]; figure 1 * ----- | 1-11 | |
| X | FR 2 908 822 A1 (SAINT GOBAIN CT RECHERCHES [FR]) 23 May 2008 (2008-05-23) * page 12, line 8 - page 14, line 15; figure 1 * ----- | 1-11 | |
| X | FR 2 849 672 A1 (PEUGEOT CITROEN AUTOMOBILES SA [FR]) 9 July 2004 (2004-07-09) * page 5, line 7 - page 5, line 11; claim 1; figure 1 * ----- | 1-11 | TECHNICAL FIELDS SEARCHED (IPC)  B01D |

The present search report has been drawn up for all claims

| Place of search | Date of completion of the search | Examiner |
|---|---|---|
| Munich | 14 June 2010 | Tiercet, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 25 0031

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2010

| Patent document cited in search report | | Publication date | Patent family member(s) | | Publication date |
|---|---|---|---|---|---|
| WO 2005093229 | A2 | 06-10-2005 | DE 112005000653 | A5 | 24-07-2008 |
| EP 1503052 | A1 | 02-02-2005 | AT 339599 | T | 15-10-2006 |
| | | | DE 602004002347 | T2 | 06-09-2007 |
| | | | ES 2271805 | T3 | 16-04-2007 |
| | | | FR 2858355 | A1 | 04-02-2005 |
| | | | JP 2005054780 | A | 03-03-2005 |
| | | | US 2005022518 | A1 | 03-02-2005 |
| FR 2908822 | A1 | 23-05-2008 | CA 2669622 | A1 | 22-05-2008 |
| | | | EP 2092180 | A1 | 26-08-2009 |
| | | | WO 2008059166 | A1 | 22-05-2008 |
| | | | JP 2010510427 | T | 02-04-2010 |
| | | | KR 20090089318 | A | 21-08-2009 |
| | | | US 2010043408 | A1 | 25-02-2010 |
| FR 2849672 | A1 | 09-07-2004 | NONE | | |

EPO FORM P0459

For more details about this annex : see Official Journal of the European Patent Office, No. 12/82

**EP 2 213 359 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006267021 A